# EUROPÄISCHE PATENTSCHRIFT

(11) **EP 3 112 229 B1**
(45) Veröffentlichungstag und Bekanntmachung des Hinweises auf die Patenterteilung: **14.03.2018**
(21) Anmeldenummer: 15174288.9
(22) Anmeldetag: 29.06.2015
(51) Int. Cl.: B60S 9/18, B60D 1/66

(54) **AN EINER ANHÄNGERDEICHSEL BEFESTIGBARE STÜTZVORRICHTUNG**
SUPPORT DEVICE THAT CAN BE ATTACHED TO A TRAILER TOW BAR
DISPOSITIF D'APPUI POUVANT ÊTRE FIXÉ À UN TIMON D'ATTELAGE

(43) Veröffentlichungstag der Anmeldung: 04.01.2017
(73) Patentinhaber: Winterhoff GmbH, 58339 Breckerfeld (DE)
(72) Erfinder: Winterhoff, Ulrich, 58339 Breckerfeld (DE)
(74) Vertreter: Dantz, Jan Henning

(56) Entgegenhaltungen:
- DE-U1-202005 000 394
- DE-U1-202011 101 120
- DE-U1-202014 102 854

## Beschreibung

Die Erfindung betrifft eine an einer Anhängerdeichsel befestigbare Stützvorrichtung nach dem Oberbegriff des Anspruchs 1.

Derartige Stützvorrichtungen, bei denen das verschwenkbare Stützelement beispielsweise aus einem Laufrad besteht, sind so konzipiert, dass das Stützelement, also das Laufrad, bei Betätigung, d.h. axialer Verstellung des Innenrohres mittels einer Handkurbel, automatisch aus- bzw. eingeschwenkt wird, wobei das Ausschwenken in eine Stützstellung und das Einschwenken in eine Nicht-Gebrauchsstellung erfolgt.

Zur selbsttätigen Verschwenkung ist ein Klappmechanismus mit einer Arretiereinrichtung vorgesehen, die aus einem Riegelbolzen besteht sowie einem damit fest verbundenen Kurvenstück, das mit einem am zugeordneten Ende des Außenrohres angebrachten, nach außen ragenden Kragen korrespondiert.

In abgeschwenkter, also aufstehender Position des Stützelementes durchtritt der Riegelbolzen das Innenrohr in beiden sich gegenüberliegenden Wandbereichen und stützt sich unter Blockierung der Verschwenkmöglichkeit des Stützelementes an einer Strebe ab, die mit Schwenklaschen verbunden ist, mittels derer, in Kombination mit einer Schwenkachse, das Stützelement schwenkbar am Innenrohr befestigt ist.

Eine solche Stützvorrichtung ist in der DE 20 2011 101 120 U1 offenbart.

Prinzipiell hat sich diese Konstruktion bewährt. In der Praxis hat sich jedoch gezeigt, dass bei einer Fehlbedienung der Stützvorrichtung die Arretiereinrichtung außer Eingriff gelangt, wenn das Stützelement belastet noch bodenseitig aufsteht, so dass das Stützelement unbeabsichtigt in eine Nicht-Gebrauchsstellung verschwenkt wird.

Dies kann beispielsweise bei einem nicht angekuppelten Rangiervorgang eines Anhängers der Fall sein, wenn dabei durch Drehen einer Handkurbel das Innenrohr und damit das Stützelement in das Außenrohr eingefahren wird, so dass das Kurvenstück die Formscheibe derart kontaktiert, dass der Riegelbolzen außer Eingriff gerät.

Durch die dann fehlende Abstützung des Stützelementes neigt sich die Anhängerdeichsel plötzlich in Bodenrichtung, so dass es hierbei zu Verletzungen kommen kann.

Der Erfindung liegt die Aufgabe zugrunde, eine Stützvorrichtung der gattungsgemäßen Art so weiterzuentwickeln, dass ihre Betriebssicherheit verbessert wird.

Diese Aufgabe wird durch eine Stützvorrichtung mit den Merkmalen des Anspruchs 1 gelöst.

Durch diese konstruktive Ausbildung wird wirksam verhindert, dass das Innenrohr leichtgängig derart axial verschoben werden kann, dass die Arretiereinrichtung außer Eingriff kommt, solange das Stützelement bodenseitig aufsteht.

In einer unbelasteten Stellung, wenn die Anhängerdeichsel an einem Zugfahrzeug angekuppelt ist und das Stützelement unbelastet ist, ist das Bremselement selbsttätig außer Eingriff gebracht, so dass das Arretierelement in eine funktionslose Position bringbar ist und das Stützelement aufschwenkt.

Die insoweit deutlich verbesserte Betriebssicherheit der Stützvorrichtung lässt sich nach einem weiteren Gedanken sehr einfach realisieren.

Hierzu ist vorgesehen, an der die Schwenklaschen tragenden Schwenkachse, die verschiebegesichert quer verlaufend im Innenrohr gelagert ist, das Bremselement zu halten, das beispielsweise aus einem Rohrabschnitt bestehen kann, dessen Außendurchmesser etwa dem lichten Durchmesser des Innenrohres besteht.

Dabei bildet ein Teil der freien Stirnfläche des Bremselementes in Funktion eine Bremsfläche, die reibend an dem zum Stand der Technik bereits genannten Riegelbolzen anliegt, der quer zur Längsachse des Innenrohres federbelastet mittels des Kurvenstücks verschiebbar ist.

Um das Bremselement in bzw. außer Eingriff bringen zu können, ist eine axiale Relativverschiebung erforderlich, die dadurch möglich ist, dass die Schwenkachse in axial ausgerichteten Langlöchern gelagert ist, die in der Wandung des Innenrohres vorgesehen sind.

Bei Belastung, d.h. bei bodenseitigem Aufstand des Stützelementes wird die Schwenkachse durch die angeschlossenen Radlaschen unter Mitnahme des Bremselementes in Richtung des Riegelbolzens verschoben, entlang der Langlöcher, wobei dann das Bremselement an dem Riegelbolzen anliegt, der im Übrigen bevorzugt aus einem Mehrkant besteht, beispielsweise einem Vier- oder Sechskant, wodurch sich eine relativ große Bremsfläche in Kombination mit dem anliegenden Bremselement ergibt.

Anstelle eines Rohrabschnitts können auch andere Formen und Materialien als Bremselement eingesetzt werden, beispielsweise Reibmaterial, wie es bei Bremsbelägen zum Einsatz kommt, wobei dann das Bremselement als Vollkörper ausgebildet ist, um eine möglichst große Reibfläche zu erhalten.

Weitere vorteilhafte Ausbildungen der Erfindung sind in den Unteransprüchen gekennzeichnet.

Ein Ausführungsbeispiel der Erfindung wird nachfolgend anhand der beigefügten, Zeichnungen beschrieben.

Es zeigen:
- Figur 1: eine erfindungsgemäße Stützvorrichtung in verschiedenen Ansichten
- Figuren 2 und 3: jeweils einen Längsschnitt durch einen Teil der Stützvorrichtung, entsprechend der Linie X-X in Figur 1, jeweils in unterschiedlichen Funktionsstellungen
- Figuren 4 und 5: jeweils einen vergrößerten Teilausschnitt der Stützvorrichtung, ebenfalls in verschiedenen Stellungen, im Längsschnitt dargestellt.

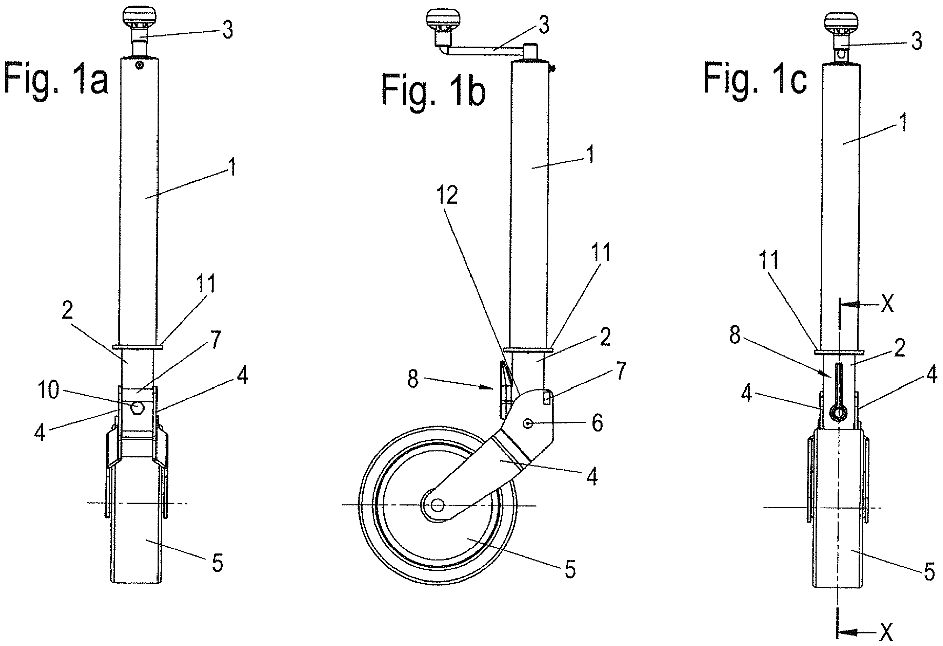

In der Fig. 1 ist eine an einer nicht gezeigten Anhängerdeichsel befestigbare Stützvorrichtung dargestellt, wobei die Figur 1a) eine Rückansicht, die Figur 1b) eine Seitenansicht und die Figur 1c) eine Vorderansicht der Stützvorrichtung wiedergeben.

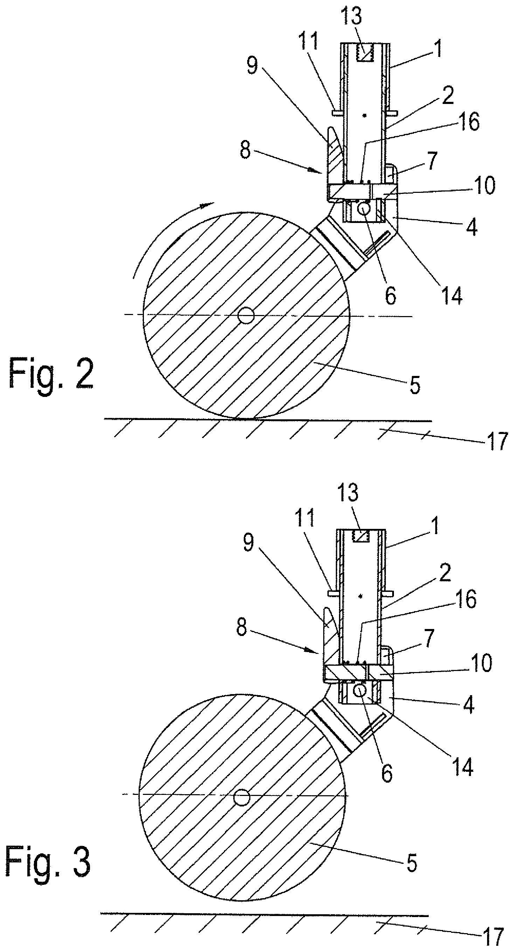

Diese Stützvorrichtung weist ein Außenrohr 1 auf, in dem axial verschiebbar ein Innenrohr 2 geführt ist, das über einen Spindeltrieb, mit einer Handkurbel 3 und einer Gewindespindel 13 (Figur 2) verstellbar ist.

An dem Innenrohr 2 ist endseitig ein Stützelement 5 in Form eines Stützrades verschwenkbar angeordnet, wobei zwei Schwenklaschen 4 vorgesehen sind, die einerseits das Stützelement 5 halten und andererseits mittels einer Schwenkachse 6 am Innenrohr 2 schwenkbar gehalten sind.

Wie besonders deutlich in der Figur 1b) zu erkennen ist, sind die dem Stützelement 5 abgewandten Kanten der Schwenklaschen 4 jeweils als Kurve 12 ausgebildet, deren Funktion später erläutert wird.

Im Innenrohr 2 ist eine Arretiereinrichtung 8 positioniert, die aus einem mittels einer Druckfeder 16 federbelasteten, quer zur Längsachse des Innenrohres 2 verschiebbaren Riegelbolzen 10 und einem damit fest verbundenen Kurvenstück 9 besteht.

In der Figur 1 ist eine ausgefahrene Position des Stützelementes 5 abgebildet, ebenso wie in der Figur 2, wobei das Stützelement 5 auf einem Boden 17 aufsteht.

In dieser Position ist das Stützelement 5 in seiner Schwenkbewegung dadurch blockiert, dass der Riegelbolzen 10 an einer die beiden Schwenklaschen 4 miteinander verbindenden Strebe 7 anliegt, d.h., die Strebe 7 stützt sich auf der dem Stützelement 5 abgewandten Seite am Riegelbolzen 10 ab, so dass eine Einschwenkung des Stützelementes 5 in Richtung des Pfeiles nicht möglich ist.

Zum Aufschwenken des Stützelementes 5 in eine Nicht-Gebrauchsstellung, also gegenüber dem Boden 17 in eine berührungslose Position, entsprechend der Figur 3, wird das Innenrohr 2 mittels des Spindeltriebs in das Außenrohr 1 eingefahren, bis zum einen das Kurvenstück 9 an einem vorstehenden Kragen 11 des Außenrohres 1 zur Anlage kommt, wobei dann der Riegelbolzen 10 aus seinem Stützbereich mit der Strebe herausgezogen wird und somit die Verschwenkmöglichkeit des Stützelementes 5 frei gibt. Im weiteren Verlauf kommen die Schwenklaschen 4 mit ihren Kurven 12 gleichfalls am Kragen 11 zur Anlage und zwar derart, dass bei einem Weiterdrehen des Spindeltriebs durch die Form der Kurven 12 das Stützelement 5 hochgeschwenkt wird.

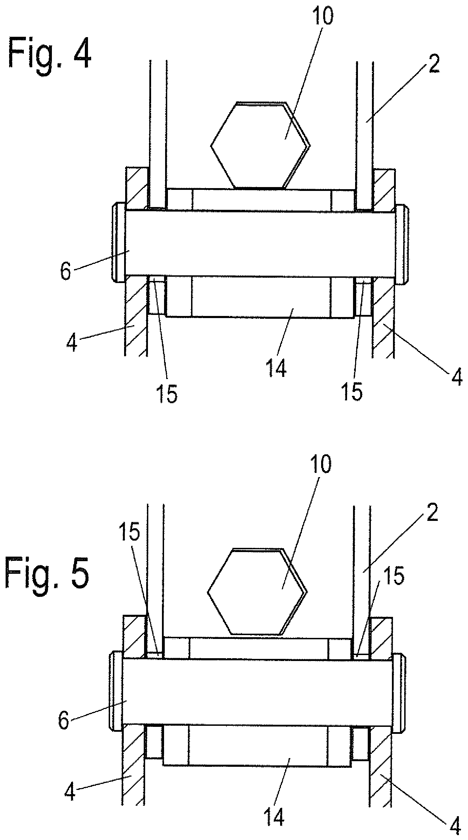

Um ein Hochschwenken in belasteter Stellung des Stützelementes 5 durch Einschieben des Innenrohres 2 in das Außenrohr 1 zu verhindern, ist gemäß der Erfindung ein Bremselement 14 vorgesehen, das als vergrößerte Einzelheit in den Figuren 4 und 5 erkennbar ist.

In Stützstellung des Stützelementes 5, wie sie in der Figur 2 abgebildet ist, liegt das Bremselement 14 bremsend (Fig. 4) am Riegelbolzen 10 an, der dadurch auch bei Kontakt des Kurvenstückes 9 mit dem Kragen 11 nicht oder nur sehr schwer aus seiner Arretierposition herausgezogen werden kann. Dabei sind Reibkräfte zwischen dem Bremselement 14 und dem Riegelbolzen 10 nur mit erheblichem Kraftaufwand beim Drehen der Handkurbel 3 zu überwinden.

Erst wenn das Stützelement 5 entlastet ist und nicht mehr auf dem Boden 17 aufsteht, gelangt das Bremselement 14 in eine Position, in der die Reibfläche den Riegelbolzen 10 nicht mehr kontaktiert.

Um diese Axialverschiebung, bezogen auf die Längsachse des Innenrohres 2, des Bremselementes 14 zu ermöglichen, ist die Schwenkachse 6, auf der das Bremselement 14 gehalten ist, in Langlöchern 15 des Innenrohres 2 gelagert, die sich in Verschieberichtung des Bremselementes 14 erstrecken.

In der Figur 4 ist die Bremsstellung des Bremselementes 14 abgebildet, bei der eine Stirnseite an einer Fläche des als Sechskant ausgebildeten Riegelbolzens 10 reibschlüssig anliegt, wobei die auf das Innenrohr 2 wirkende Auflagekraft bewirkt, dass das Innenrohr 2 im Bereich seiner Langlöcher 15 an der zugeordneten Oberseite der Schwenkachse 6 zur Anlage kommt.

Bei einer Entlastung des Stützelementes 5, wie sie eintritt, wenn die gesamte Stützvorrichtung bzw. die angeschlossene Anhängerdeichsel an einem Zugfahrzeug angekuppelt ist, verfährt das Innenrohr 2 durch Betätigung der Handkurbel 3 nach oben, so dass die Schwenklaschen 4 mit dem angeschlossenen Stützelement 5 durch ihr Eigengewicht derart axial nach unten bewegt werden, dass die Schwenkachse 6 auf der dem Riegelbolzen 10 gegenüberliegenden Seite im Endbereich der Langlöcher 15 zur Anlage kommt, so dass die Bremswirkung aufgehoben ist, wie dies in der Figur 5 deutlich zu erkennen ist.

Das Bremselement 14 ist im freien Ende des Innenrohres 2 positioniert, unterhalb der Arretiereinrichtung, und ist im Beispiel als Rohrabschnitt ausgebildet. Dies ist insoweit vorteilhaft, als das Innere des Bremselements 14 dann Platz bietet für die Druckfeder 16, die sich einerseits an einem Bündchen des Riegelbolzens 10 und andererseits an der Innenwandung des Innenrohres 2 abstützt.

### Bezugszeichenliste

- 1: Außenrohr
- 2: Innenrohr
- 3: Handkurbel
- 4: Schwenklasche
- 5: Stützelement
- 6: Schwenkachse
- 7: Strebe
- 8: Arretiereinrichtung
- 9: Kurvenstück
- 10: Riegelbolzen
- 11: Kragen
- 12: Kurve
- 13: Gewindespindel
- 14: Bremselement
- 15: Langloch
- 16: Druckfeder
- 17: Boden

## Patentansprüche

1. An einer Anhängerdeichsel befestigbare Stützvorrichtung, mit einem in einem Außenrohr (1) axial verstellbar geführten Innenrohr (2), das ein mittels einer Klappmechanik von einer Stütz- in eine Nicht-Gebrauchsstellung verschwenkbares Stützelement (5), wie ein Laufrad, trägt, wobei die Klappmechanik eine Arretiereinrichtung (8) aufweist, mit der das Stützelement (5) in abgeschwenkter Stützstellung gegenüber dem Innenrohr (2) arretiert ist, **dadurch gekennzeichnet, dass** im Innenrohr (2) ein Bremselement (14) angeordnet ist, das in Stützstellung des Stützelementes (5) bremsend mit der Arretiereinrichtung (8) in Eingriff und in Nicht-Gebrauchsstellung des Stützelementes (5) außer Eingriff steht.

2. Stützvorrichtung nach Anspruch 1, **dadurch gekennzeichnet, dass** das Bremselement (14) an einer Schwenkachse (6) gehalten ist, die durch das Innenrohr (2) geführt ist und an der Schwenklaschen (4) zur Verbindung des Stützelementes (5) mit dem Innenrohr (2) gelagert sind.

3. Stützvorrichtung nach Anspruch 1 oder 2, **dadurch gekennzeichnet, dass** die Arretiereinrichtung (8) einen Riegelbolzen (10) aufweist, der federbelastet quer zur Achsrichtung des Innenrohres (2) angeordnet ist und an dem das Bremselement (14) in Funktionsstellung reibend anliegt.

4. Stützvorrichtung nach Anspruch 2, **dadurch gekennzeichnet, dass** die Schwenkachse (6) in Langlöchern (15) des Innenrohres (2) gelagert ist, und sich in dessen Achsrichtung erstrecken.

5. Stützvorrichtung nach Anspruch 3 und Anspruch 4, **dadurch gekennzeichnet, dass** in unbelasteter Stellung des Stützelementes (5) die Schwenkachse (6) an der dem Riegelbolzen (10) abgewandten Seite an der Wandung der Langlöcher (15) anliegt.

6. Stützvorrichtung nach einem der vorhergehenden Ansprüche, **dadurch gekennzeichnet, dass** das Bremselement (14) aus einem Rohrabschnitt gebildet ist, dessen Außendurchmesser etwa dem lichten Durchmesser des Innenrohres (2) entspricht.

7. Stützvorrichtung nach Anspruch 4, **dadurch gekennzeichnet, dass** eine Stirnseite des Bremselementes (14) eine Reibfläche bildet, die an einer zugeordneten Fläche des als Mehrkant ausgebildeten Riegelbolzens (10) in Funktionsstellung anliegt.

8. Stützvorrichtung nach Anspruch 4, **dadurch gekennzeichnet, dass** der Riegelbolzen (10) in belasteter Stellung des Stützelementes (5) an einer ein Widerlager bildenden, die beiden abständig zueinander angeordneten Schwenklaschen (4) miteinander verbindenden Strebe (7) anliegt.

## Claims

1. Support device which can be attached to a trailer tow bar, comprising an inner tube (2) which is guided in an axially movable manner in an outer tube (1) and which carries a support element (5), such as a wheel, that can be pivoted by means of a folding mechanism from a supporting position to a non-use position, wherein the folding mechanism has a locking device (8), by which the support element (5) is locked in a downwardly pivoted supporting position relative to the inner tube (2), **characterized in that** arranged in the inner tube (2) is a brake element (14) which is in braking engagement with the locking device (8) in the supporting position of the support element (5) and is out of engagement in the non-use position of the support element (5).

2. Support device according to claim 1, **characterized in that** the brake element (14) is held on a pivot axle (6) which is guided by the inner tube (2) and on which pivot brackets (4) are mounted for connecting the support element (5) to the inner tube (2).

3. Support device according to claim 1 or 2, **characterized in that** the locking device (8) has a locking bolt (10) which is arranged in a spring-loaded manner transversely to the axial direction of the inner tube (2) and against which the brake element (14) bears frictionally in the functional position.

4. Support device according to claim 2, **characterized in that** the pivot axle (6) is mounted in elongate holes (15) of the inner tube (2), and extend in the axial direction thereof.

5. Support device according to claim 3 and claim 4, **characterized in that**, in the unloaded position of the support element (5), the pivot axle (6) bears against the wall of the elongate holes (15) on the side remote from the locking bolt (10).

6. Support device according to one of the preceding claims, **characterized in that** the brake element (14) is formed of a tube section having an external diameter that corresponds approximately to the clear diameter of the inner tube (2).

7. Support device according to claim 4, **characterized in that** an end face of the brake element (14) forms a friction surface which in the functional position bears against an associated surface of the polygonal locking bolt (10).

8. Support device according to claim 4, **characterized in that** the locking bolt (10), in the loaded position of the support element (5), bears against a strut (7) which forms an abutment and which connects the two spaced-apart pivot brackets (4) to one another.

## Revendications

1. Dispositif d'appui pouvant être fixé à un timon d'attelage, avec un tube intérieur (2) guidé de façon mobile dans le sens axial dans un tube extérieur (1), qui porte un élément d'appui (5), tel qu'une roue, qui peut basculer au moyen d'un mécanisme rabattable d'une position d'appui à une position de non-utilisation, le mécanisme rabattable présentant un dispositif d'arrêt (8) qui bloque l'élément d'appui (5) dans la position d'appui basculée par rapport au tube intérieur (2), **caractérisé en ce qu'**il est prévu disposé dans le tube intérieur (2) un élément de freinage (14) qui est en prise avec le dispositif d'arrêt (8) dans la position d'appui de l'élément d'appui (5) et hors de prise dans la position de non-utilisation de l'élément d'appui (5).

2. Dispositif d'appui selon la revendication 1, **caractérisé en ce que** l'élément de freinage (14) est retenu sur un axe de pivotement (6) qui est passé à travers le tube intérieur (2) et sur lequel des flasques pivotants (4) sont supportés pour relier l'élément d'appui (5) au tube intérieur (2).

3. Dispositif d'appui selon la revendication 1 ou 2, **caractérisé en ce que** le dispositif d'arrêt (8) présente un boulon de verrouillage (10) qui est disposé transversalement par rapport à la direction de l'axe du tube intérieur (2) sous la contrainte d'un ressort et sur lequel l'élément de freinage (14) repose en frottement dans la position de fonctionnement.

4. Dispositif d'appui selon la revendication 2, **caractérisé en ce que** l'axe de pivotement (6) est supporté dans des trous oblongs (15) du tube intérieur (2) et s'étendent dans le sens de l'axe de celui-ci.

5. Dispositif d'appui selon la revendication 3 et la revendication 4, **caractérisé en ce que**, dans la position non chargée de l'élément d'appui (5), l'axe de pivotement (6) repose sur la paroi des trous oblongs (15) sur le côté opposé au boulon de verrouillage (10).

6. Dispositif d'appui selon l'une des revendications précédentes, **caractérisé en ce que** l'élément de freinage (14) est formé d'un segment de tube dont le diamètre extérieur correspond approximativement au diamètre ouvert du tube intérieur (2).

7. Dispositif d'appui selon la revendication 4, **caractérisé en ce qu'**une face d'extrémité de l'élément de freinage (14) forme une surface de frottement qui repose sur une surface associée du boulon de verrouillage (10) de forme polygonale dans la position de fonctionnement.

8. Dispositif d'appui selon la revendication 4, **caractérisé en ce que** le boulon de verrouillage (10) repose, dans la position chargée de l'élément d'appui (5), sur un jambage (7) formant un contre-appui et reliant entre elles les deux flasques pivotants (4) disposés à distance l'un de l'autre.
